# EUROPEAN PATENT APPLICATION

(11) **EP 1 528 300 A1**
(43) Date of publication of application: **04.05.2005**
(21) Application number: 04025400.5
(22) Date of filing: 26.10.2004
(51) Int. Cl.: F16J 15/08

(54) **Cylinder heat gasket**

(30) Priority: 29.10.2003 JP 2003369215
(71) Applicant: ISHIKAWA GASKET CO. LTD., Tokyo (JP)
(72) Inventor: Udagawa, Tsunekazu, Ichikawa-shi (JP)
(74) Representative: Banzer, Hans-Jörg, Dipl.-Ing.

(57) **Abstract**

A cylinder head gasket (11) of a non-fold-over type is formed of a plurality of laminated metal plates (3, 5, 7), and has a cylinder bore (11) to be sealed. Peripheral edges of the laminated metal plates (3, 5) constituting the gasket (1) around the cylinder bore (11) are welded for sealing. Accordingly, it is possible to provide the cylinder head gasket (11) of the non-fold-over type with high sealing ability and low cost applicable to an engine in which a combustion gas with high temperature and pressure is applied.

## Description

### Background of the Invention and Related Art Statement

The invention relates to a cylinder head gasket of a non-fold-over type to be disposed between a cylinder block and a cylinder head of an internal combustion engine for sealing a joint portion, where high temperature and high pressure are applied.

In a conventional cylinder head gasket of a laminated metal type having a cut-out structure (non-fold-over type), laminated metal plates have a cylinder bore corresponding to a cylinder bore of a cylinder block. In general, a shim or a bead plate with a coating is provided around the cylinder bore for obtaining tight sealing. In such a cylinder head gasket, when a combustion gas with high temperature and pressure is applied, a small amount of gas may penetrate through a section of the laminated metal plates around the opening. Accordingly, it is difficult to provide such a cylinder head gasket to a gasoline engine or a diesel engine of a direct injection type in which a cylinder has a high inner pressure.

On the other hand, the non-fold-over type gasket does not need to apply such a process of providing a holding portion or grommet around a hole such as a cylinder bore, a water hole or an oil hole, thereby making it easy to produce. Further, the non-fold-over type gasket can be formed of a small number of parts. Therefore, it has been desired to develop a non-fold-over type gasket applicable to an engine in which a combustion gas with high temperature and pressure is applied.

In view of the above problems, an object of the invention is to provide a cylinder head gasket of the non-fold-over type with high sealing ability and low cost applicable to an engine in which a combustion gas with high temperature and pressure (maximum combustion pressure, Pmax) is applied.

### Summary of the Invention

According to the invention, this object is achieved by a cylinder head gasket as defined in claim 1. The dependent claims define preferred and advantageous embodiments of the invention.

In order to solve the problems described above, a cylinder head gasket of the present invention is formed of a plurality of laminated metal plates. The cylinder head gasket is a non-fold-over type, and has at least one cylinder bore corresponding to a cylinder bore of a cylinder block. In the cylinder head gasket formed of the laminated metal plates, a peripheral edge of the cylinder bore is sealed with welding.

As a preferable embodiment of the present invention, a peripheral edge of the cylinder bore formed in the laminated metal plates is sealed with leaser welding, seam welding or continuous spot welding. A welded portion of the peripheral edge of the cylinder bore may be a cut section of the laminated metal plates or an overlapped portion between the laminated metal plates. Namely, the welded portion may extend radially outwardly from an inner edge of the bore, or extend vertically along an axis of the bore.

According to the cylinder head gasket of the present invention, in the cylinder head gasket of the non-fold-over type, a peripheral edge of the cylinder bore formed in the laminated metal plates constituting the cylinder head gasket is sealed with welding. Accordingly, it is possible to prevent a combustion gas from entering through an overlapped section of the laminated metal plates at the cylinder bore. Therefore, it is possible to provide a cylinder head gasket of the non-fold-over type with high sealing ability and low cost applicable to a gasoline engine or a diesel engine of a direct injection type in which a combustion gas with high temperature and pressure is applied.

### Brief Description of the Drawings

Fig. 1 is a partially cut plan view showing a first embodiment of the invention;
Fig. 2 is an enlarged sectional view taken along line 2-2 in Fig. 1;
Fig. 3 is a sectional view corresponding to Fig. 2 according to a second embodiment;
Fig. 4 is a sectional view corresponding to Fig. 2 according to a third embodiment;
Fig. 5 is a sectional view corresponding to Fig. 2 according to a fourth embodiment;
Fig. 6 is a sectional view corresponding to Fig. 2 according to a fifth embodiment;
Fig. 7 is a sectional view corresponding to Fig. 2 according to a sixth embodiment; and
Fig. 8 is a sectional view corresponding to Fig. 2 according to an eighth embodiment.

### Detailed Description of Preferred Embodiments

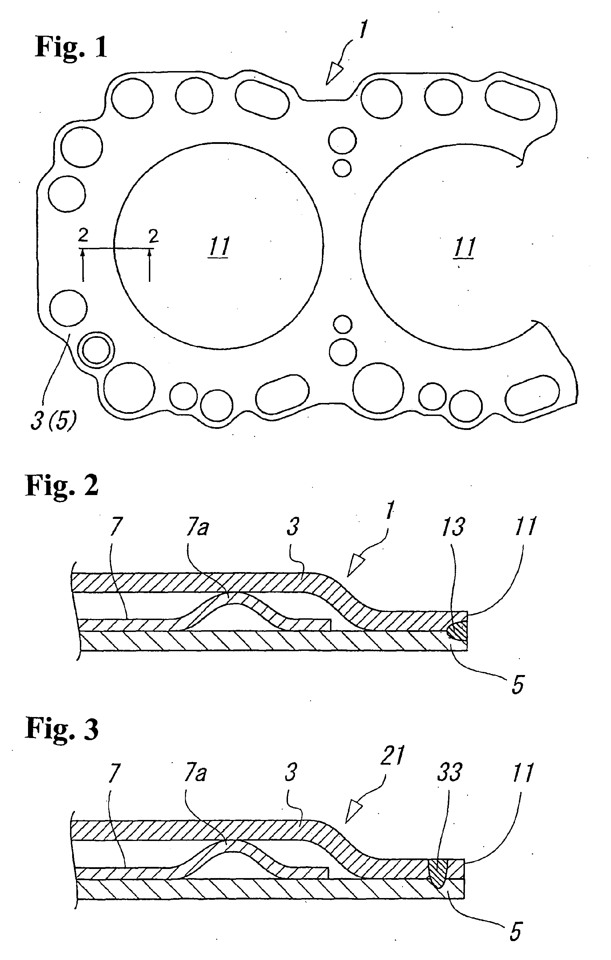

Hereunder, embodiments of the present invention will be explained in detail with reference to the accompanying drawings. Figs. 1 and 2 show a cylinder head gasket according to a first embodiment of the invention, wherein Fig. 1 is a plan view thereof, and Fig. 2 is an enlarged sectional view thereof.

A cylinder head gasket 1 is to be disposed between a cylinder head and a cylinder block of an internal combustion engine such as a gasoline engine or a diesel engine of a direct injection type for sealing a joint portion, where a combustion gas with high temperature and high pressure is applied. As shown in Figs. 1 and 2, the cylinder head gasket 1 is formed of upper and lower outer metal plates 3 and 5, and a metal plate 7 with a bead 7a disposed between the metal plates 3 and 5. Also, the cylinder head gasket 1 is provided with openings 11 corresponding to cylinder bores of the cylinder block, fluid holes of cooling water and oil, and holes for tightening bolts around the openings as necessary.

More specifically, as shown in Fig. 2, the metal plate with the bead 7a formed around the cylinder bore 11 is disposed between the upper and lower outer metal plates 3 and 5. The upper outer metal plate 3 is bent around the cylinder bore 11 into a substantially hook shape, so that peripheral edges of the upper and lower outer metal plates 3 and 5 around the cylinder bore 11 are overlapped. Cut sections of the peripheral edges of the upper and lower outer metal plates 3 and 5 around the cylinder bore 11 are welded for sealing a gas penetrating between the laminated metal plates. Reference numeral 13 in the figure denotes a welding portion formed with welding. Namely, the welding portion extends radially outwardly from an inner edge of the cylinder bore.

The metal plates 3 and 5 may be welded with welding method such as laser welding or resistance welding method such as seam welding or continuous spot welding. A suitable method is selected according to a spot of welding or a material of metal plates to be welded.

In the cylinder head gasket 1 with the structure described above, i.e. the cylinder head gasket of a non-fold-over type, the peripheral edges of the metal plates 3 and 5 constituting the upper and lower outer layers around the cylinder bore 11 are welded with laser welding or continuous spot welding. Accordingly, it is possible to prevent a combustion gas from penetrating through a section of the laminated metal plates. Therefore, it is possible to provide a cylinder head gasket of the non-fold over type with high sealing ability and low cost applicable to an engine such as a diesel engine in which a combustion gas with high temperature and pressure is applied.

Fig. 3 is a view showing a cylinder head gasket according to a second embodiment of the invention. A cylinder head gasket 21 has a basic structure similar to that in the first embodiment, and the peripheral edges of the upper and lower outer metal plates 3 and 5 around the cylinder bore 11 are welded above the upper outer metal plate 3. Reference numeral 33 in the figure denotes a welding portion formed with welding. Here, other structural features and effects of the cylinder head gasket 21 of the second embodiment are substantially the same as those in the first embodiment. Accordingly, the same components or corresponding components are denoted by the same reference numerals, and their descriptions are omitted.

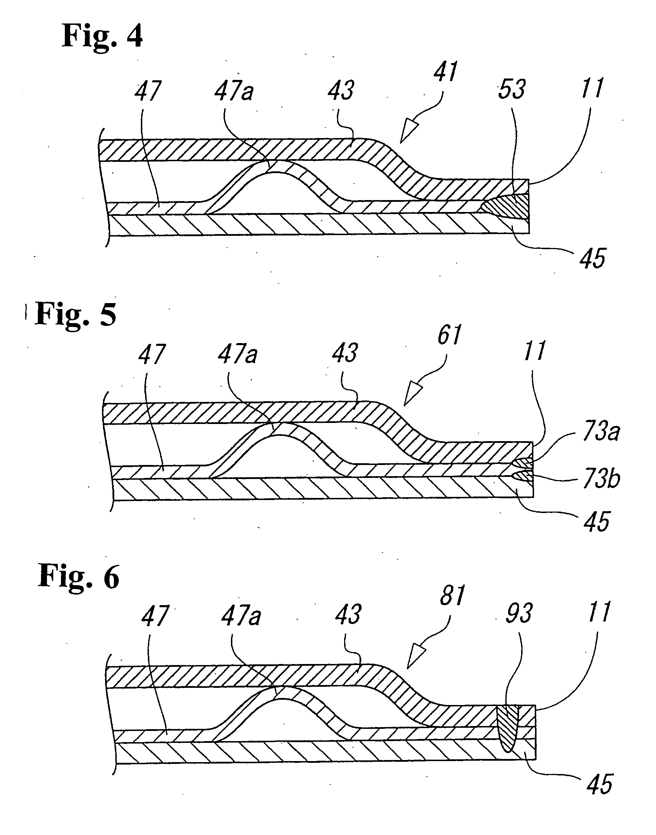

Fig. 4 is a view showing a cylinder head gasket according to a third embodiment of the invention. As shown in Fig. 4, a cylinder head gasket 41 is formed of upper and lower outer metal plates 43 and 45, and a middle metal plate 47 with a bead 47a disposed between the metal plates 43 and 45. Cut sections of the metal plates 43, 45, and 47 at peripheral edges thereof around the cylinder bore 11 are welded to extend over the upper and lower outer metal plates 43 and 45 and the middle metal plate 47 to form a welding portion 53. Other structural features and effects of the cylinder head gasket 41 of the third embodiment are substantially the same as those in the first embodiment. Accordingly, the same components or corresponding components are denoted by the same reference numerals, and their descriptions are omitted.

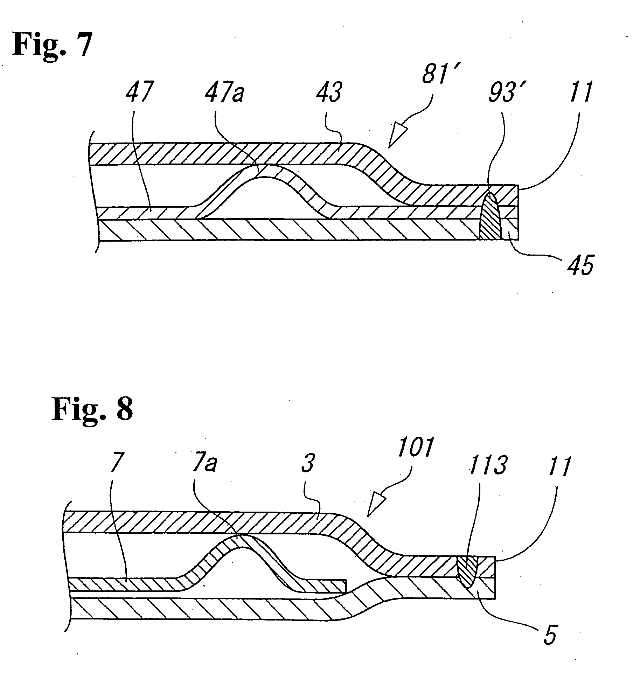

Fig. 5 is a view showing a cylinder head gasket according to a fourth embodiment of the invention. A cylinder head gasket 61 has a basic structure similar to that in the third embodiment. Overlapped portions of the laminated metal plates 43, 45, and 47 at peripheral edges thereof around the cylinder bore 11 are separately welded. Accordingly, welding portions 73a and 73b are formed between the upper outer metal plate 43 and the middle metal plate 47, and between the lower outer metal plate 45 and the middle metal plate 47, respectively. Other structural features and effects of the cylinder head gasket 61 of the fourth embodiment are substantially the same as those in the third embodiment. Accordingly, the same components or corresponding components are denoted by the same reference numerals, and their descriptions are omitted.

Fig. 6 is a view showing a cylinder head gasket according to a fifth embodiment of the invention. The overlapped portions of the laminated metal plates 43, 45, and 47 at the peripheral edges thereof around the cylinder bore 11 are welded above the upper outer metal plate 43 to form a welding portion 93 extending to the middle metal plate 47 and the lower outer metal plate 45. Incidentally, forming the welding portion 93 is not limited to the structure made from the upper outer metal plate 43.

As shown in Fig. 7, in a cylinder head gasket 81' according to a sixth embodiment, a welding portion 93' is formed from the lower outer metal plate 45, and extends to the middle metal plate 47 and the upper outer metal plate 43. Here, other structural features and effects of the cylinder head gaskets 81 and 81' of the fifth and sixth embodiments are substantially the same as those in the third embodiment. Accordingly, the same components or corresponding components are denoted by the same reference numerals, and their descriptions are omitted.

In the embodiments described above, the peripheral edge of the upper outer metal plate constituting the gasket is bent in a substantially hook shape, and the peripheral edges of the metal plates constituting the gasket are overlapped. The gasket of the invention is not limited to such a structure, and may be formed like a cylinder head gasket 101 shown in Fig. 8. In the embodiment shown in the figure, the cylinder head gasket 101 has a structure similar to those in the first and second embodiments. The peripheral edges of the upper and lower outer metal plates 3 and 5 are bent in a substantially hook shape, and are overlapped around the edge of the cylinder bore 11. The overlapped portion is welded to form a welding portion. Reference numeral 113 in the figure denotes the welding portion formed with welding.

The cylinder head gasket of the invention is not limited to the structure formed of the three metal plates in the first to seventh embodiments. More than two metal plates may be laminated to form the cylinder head gasket. Further, one of the metal plates may be provided with a bead, if necessary.

In a conventional gasket of the non-fold-over type, in order to increase sealing performance, it is necessary to provide a measure for preventing gas leak such as providing seal coating on a bead of a metal plate disposed between the laminated metal plates. In the gaskets of the invention described above, it is not necessary to provide such a measure. As a result, even though the metal plates are welded, cost does not increase.

The disclosure of Japanese Patent Application No. 2003-369215, filed on October 29, 2003, is incorporated in the application.

## Claims

1. A cylinder head gasket (1, 21, 41, 61, 81, 81', 101) comprising:
a plurality of metal plates (3, 5, 7; 43, 45, 47) laminated together to form the cylinder head gasket and having at least one opening (11) corresponding to a cylinder bore of an engine, and a peripheral edge portion around the at least one opening, and a welding portion for connecting the metal plates together,
said gasket being **characterized in that** a continuous welding portion (13, 33, 53, 73a, 73b, 93, 93', 113) is formed at the peripheral edge portion around the opening (11) to seal a laminated portion of the plurality of metal plates.

2. A metal gasket (1, 21, 41, 61, 81, 81', 101) according to claim 1, wherein said continuous welding portion (13, 33, 53, 73a, 73b, 93, 93', 113) is formed with one of laser welding, seam welding and continuous spot welding.

3. A metal gasket (1, 41, 61) according to claim 1 or 2, wherein said continuous welding portion (13, 53, 73a, 73b) is located at a cut section of the metal plates.

4. A metal gasket (1, 41, 61) according to any one of claims 1-3, wherein said continuous welding portion (13, 53, 73a, 73b) extends radially outwardly from an inner edge of the at least one opening.

5. A metal gasket (21, 81, 81', 101) according to any one of claims 1-4, wherein said continuous welding portion (33, 93, 93', 113) extends vertically along an axis of the at least one opening.

6. A metal gasket (81, 81' ) according to any one of claims 1-5, wherein at least three metal plates (43, 45, 47) are laminated together to form the cylinder head gasket, said continuous welding portion (93, 93') connecting said at least three metal plates from one side of the gasket.
